# FASCICULE DE BREVET EUROPEEN

(11) **EP 0 493 281 B1**
(45) Date de publication et mention de la délivrance du brevet: **24.05.1995**
(21) Numéro de dépôt: 91430026.4
(22) Date de dépôt: 11.12.1991
(51) Int. Cl.: B60P 3/20, B60H 1/32

(54) **Procédé de fabrication de cellules isothermes de véhicules frigorifiques**
Fertigungsverfahren für isothermische Zellen von Kühlfahrzeugen
Manufacturing process for isothermic cells of refrigerator vans

(30) Priorité: 18.12.1990 FR 9016375
(43) Date de publication de la demande: 01.07.1992
(73) Titulaire: CARROSSERIE LAMBERT, 13420 Gemenos (FR)
(72) Inventeur: Lambert, Georges, F-13420 Gemenos (FR)
(74) Mandataire: Moretti, René

(56) Documents cités:
- EP-A- 0 366 616
- DE-A- 3 113 262
- DE-U- 8 323 114

## Description

La présente invention a pour objet des perfectionnements aux cellules isothermes de véhicules frigorifiques.

Le secteur technique de l'invention est celui des éléments de carrosserie des véhicules utilitaires pour le transport de denrées périssables devant être conservées à des basses températures.

Les véhicules frigorifiques sont, de façon connue, équipés d'une cellule isotherme comportant un groupe frigorifique comprenant un compresseur, un condenseur, et un évaporateur.

Généralement, ledit groupe est disposé à l'intérieur de la cellule isotherme et compte tenu de son encombrement l'espace utilisable pour l'entreposage des marchandises transportées est réduit.

Dans le but de réserver au maximum le volume de la cellule au transport, il est connu de disposer le groupe frigorifique à l'extérieur et au-dessus de la cabine du véhicule, lequel groupe est disposé en applique dans un carter parallélépipédique.

Selon cette conception, l'évaporateur est séparé du condenseur, lequel évaporateur est placé à l'intérieur de la cellule isotherme.

Le document DE-U-83.23.114 décrit une cellule isotherme de véhicule frigorifique composée d'une paroi antérieure située en arrière de la cabine de pilotage du véhicule et comprenant un groupe frigorifique dont le froid est mis en circulation dans la cellule, le groupe frigorifique étant monté dans un carénage profilé situé à l'extérieur de la cellule et au-dessus de la cabine, le carénage comportant une enceinte fixe isotherme communiquant avec la cellule et un élément de carénage raccordé à l'enceinte et à la paroi.

Le document DE-A-3.113.262 décrit une cellule isotherme de véhicule frigorifique composée d'une paroi et comprenant un groupe frigorifique, dont le froid produit est mis en circulation dans la cellule, le groupe frigorifique étant monté dans une encein te fixe isotherme communiquant avec la cellule.

La présente invention vise à remédier aux inconvénients des procédés connus d'installation des équipements frigorifiques dans les cellules isothermes.

Un objectif de l'invention est de proposer un procédé de fabrication de cellules isothermes permettant d' intégrer le groupe frigorifique, et plus particulièrement l'évaporateur dudit groupe, afin d'utiliser pour le chargement de la cellule tout ou partie du volume libéré par l'évaporateur.

Un autre objectif de l'invention est la mise en oeuvre d'éléments standard permettant d'équiper des véhicules de puissance et de dimensions différentes.

Ces objectifs sont atteints par un procédé de fabrication de cellule isotherme de véhicule frigorifique composée d'une paroi antérieure située en arrière de la cabine de pilotage dudit véhicule et comprenant un groupe frigorifique comportant un évaporateur, un motocompresseur et un condenseur dont le froid produit par l'évaporateur est mis en circulation dans ladite cellule, dont ledit groupe frigorifique est monté dans un carénage profilé situé à l'extérieur de la cellule et au-dessus de ladite cabine, ledit carénage se composant d' une part, d'au moins une enceinte fixe isotherme communiquant avec la cellule, et d'autre part, d'au moins un élément de carénage raccordé à ladite enceinte et à ladite paroi, ladite enceinte faisant partie intégrante de ladite paroi antérieure et comportant des parois reliées en continu à ladite paroi antérieure, caractérisé en ce qu'on réalise notamment sa paroi antérieure en lui donnant une longueur L, supérieure à la hauteur H d'une cellule adaptée pour équiper un plus gros véhicule et en ce qu'on raccourcit ladite paroi en fonction de la position de son carénage par rapport au pavillon de la cabine dudit véhicule, ou de tout autre véhicule de dimensions inférieures.

Selon un mode préférentiel de réalisation, on réalise la partie de carénage inférieure formant une jupe, en lui donnant une hauteur lui permettant de compléter le carénage du groupe frigorifique d'un plus gros véhicule et on raccourcit en hauteur ladite partie de carénage inférieure, en fonction de la position de l'enceinte isotherme, par rapport au pavillon de la cabine dudit véhicule ou de tout autre véhicule, de dimensions inférieures.

Selon des modes préférentiels de mise en ouvre de l'invention :
- on suspend l'évaporateur à des inserts de fixation de la paroi de toit de ladite enceinte isotherme, de sorte à ménager autour de lui un espace pour permettre une circulation d'air et favoriser des interventions de maintenance et de réparation ;
- on monte le condenseur et le motocompresseur en console de part et d'autre de ladite enceinte isotherme, et on les fixe à des inserts implantés dans lesdites parois antérieures de la cellule ;
- on intègre dans ladite paroi antérieure un chemin de câble s'étendant de la partie extrême inférieure de ladite paroi jusqu'à l'espace délimité par ladite jupe amovible, et on recouvre ledit chemin de câble par un couvercle, placé dans un plan de la face avant de ladite paroi antérieure ;
- on fixe lesdites parties latérales amovibles du carénage, qui comportent un orifice de circulation d'air réservé à leur partie supérieure, d'une part à des inserts implantés dans la paroi antérieure de la cellule et d'autre part à d'autres inserts implantés dans les parois de l'enceinte isotherme.

L' invention permet de fabriquer des cellules isothermes perfectionnées, adaptées pour équiper des véhicules utilitaires avec un rendement frigorifique optimum, sans grever le volume interne de la cellule, à partir d'éléments standards préfabriqués, adaptables à plusieurs types de véhicules en fonction de leur puissance et de leur encombrement.

Les avantages et les caractéristiques de l'invention ressortiront encore à la lecture de la description suivante, donnée à titre d' exemple non limitatif et en référence aux dessins annexés sur lesquels :
- la figure 1 est une vue en perspective "éclatée" de la paroi antérieure d'une cellule isotherme équipant un véhicule frigorifique.
- la figure 2 est une vue en coupe transversale d'un insert de fixation des éléments qui complètent le carénage du groupe frigorifique dudit véhicule ou qui composent ledit groupe.
- la figure 3 est une vue en coupe transversale de ladite paroi antérieure au droit de l'enceinte isotherme et du chemin de câbles.
- la figure 4 est une vue en perspective partielle de ladite paroi antérieure, illustrant le montage en console du condenseur qui compose le groupe frigorifique.
- la figure 5 est une vue schématique partielle extérieure d'une cellule perfectionnée montée sur un véhicule utilitaire.

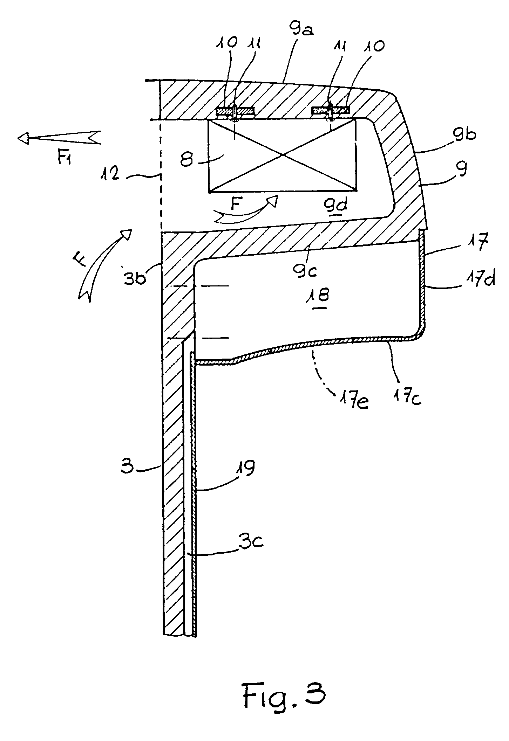

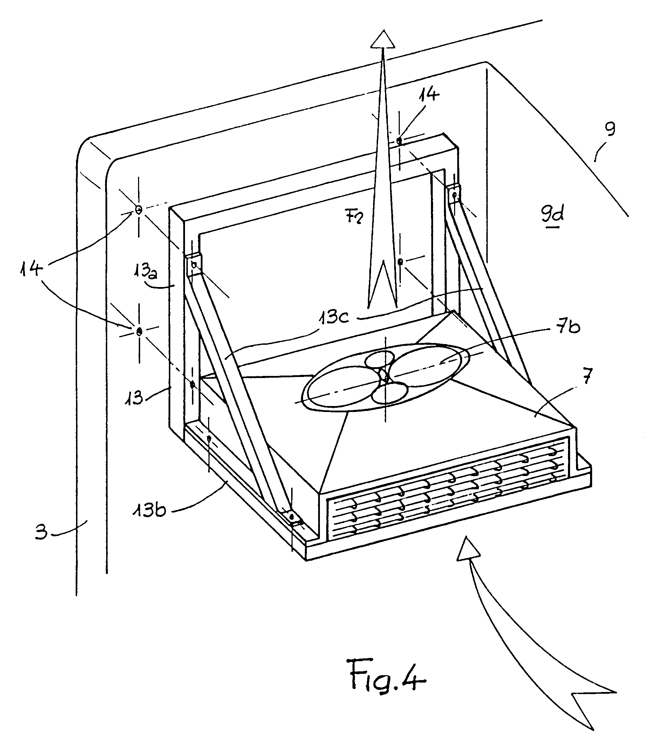

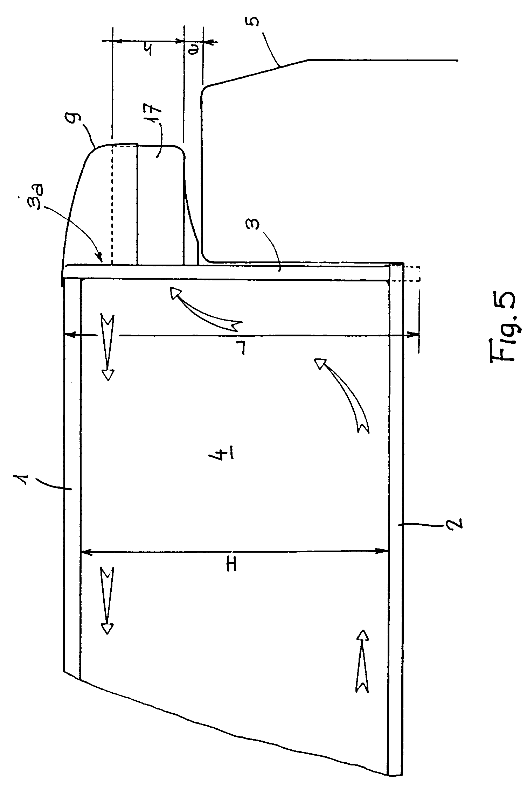

On se reporte d'abord à la figure 5 qui représente de façon schématique une cellule isotherme parallélépipédique comprenant une paroi de pavillon 1, une paroi de plancher 2, une paroi antérieure 3, une paroi postérieure (non représentée) et deux parois latérales 4.

De façon connue, ladite cellule isotherme est montée sur le châssis d'un véhicule utilitaire, de sorte que sa paroi antérieure 3 se situe à l'arrière de la cabine de pilotage 5 du véhicule. La cellule est plus haute que ladite cabine et la partie supérieure 3a de la face avant de la paroi 3 s'étend donc entre le pavillon de la cabine 5 et celui 1 de la cellule.

On utilise cette partie plane 3a qui créée une résistance à l'avancement du véhicule, pour y disposer dans un carénage profilé selon un Cx favorable à la pénétration dans l'air, le groupe frigorifique qui produit l'air réfrigéré de ladite cellule isotherme. Un tel groupe se compose essentiellement d'un motocrompresseur 6, d'un condenseur 7, d'un évaporateur 8, et de leur circuit de liaison à travers un détendeur (non représentés).

L'évaporateur 8 étant l'élément de la chaîne frigorifique qui produit le froid et dans le but d'optimiser le rendement du groupe, ledit évaporateur est disposé dans une enceinte isotherme 9 intégrée à la paroi antérieure 3 de la cellule. L'enceinte 9 déborde vers l'avant de la paroi antérieure 3 et comporte donc une paroi courbe de toit 9a reliée à une paroi avant 9b, elle-même reliée à une paroi de fond 9c et deux parois latérales 9d. Les parois de cette enceinte sont, à l'instar des parois qui composent la cellule, réalisées en matériaux composites isolants. Par l'expression "intégrée" ou "partie intégrante de " on a voulu exprimer le fait que l'enceinte 9 est partie intégrante de la paroi antérieure 3, ses propres parois 9a à 9d, rejoignant en continu ladite paroi 3 sans aucune interruption du fait que l'enceinte est moulée d'une seule pièce avec la paroi lors de sa fabrication. Cette conception a été voulue pour optimiser le volume interne de la cellule.

L'enceinte 9 est largement dimensionnée par rapport à l'encombrement de l'évaporateur 8, pour permettre une bonne circulation de l'air de reprise (flèche F) et également pour permettre un accès facile en vue de sa maintenance et des éventuelles interventions en cas de réparation.

Tel qu'illustré à la figure 3, ledit évaporateur 8 est suspendu à la paroi de toit 9a en étant fixé à des inserts 10 noyés dans la masse de ladite paroi 9a. Lesdits inserts 10 sont des plaquettes métalliques par exemple en acier, comportant un trou taraudé et la fixation de l'évaporateur est réalisée au moyen de vis 11 par exemple à tête hexagonale. L'enceinte 9 communique avec la cellule par une ouverture, d'une section droite égale à celle de l'enceinte et l'air froid produit par l'évaporateur, est envoyé directement (flèche F1) à l'intérieur de celle-ci.

Cette ouverture est fermée par une grille de sécurité 12 fixée de façon amovible et placée dans le plan de la face interne 3b de la paroi 3.

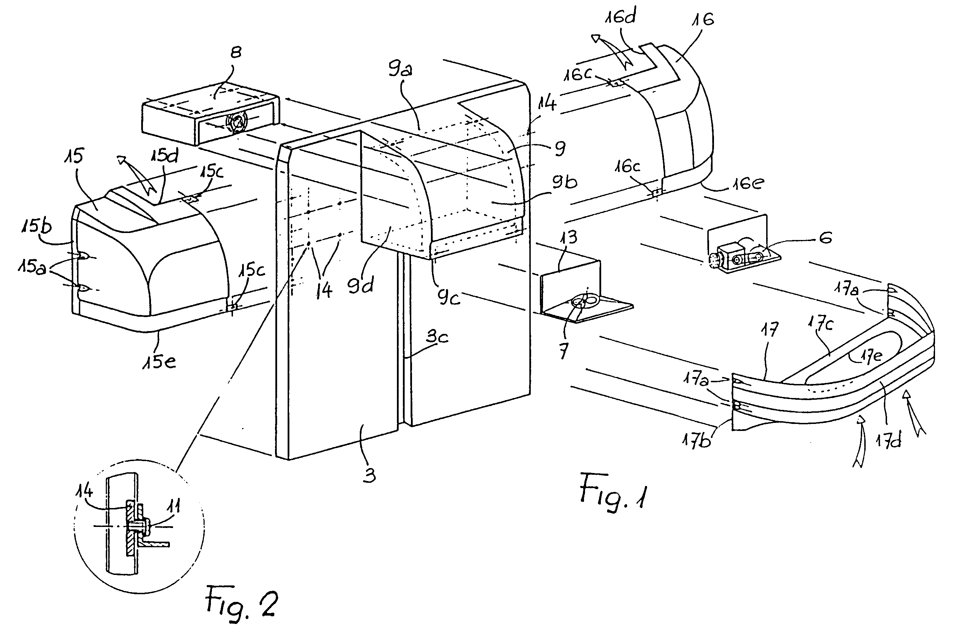

Par exemple et tel que cela est représenté à la figure 1, l'enceinte 9 est située dans la partie médiane haute de la paroi antérieure 3.

Le condenseur 7 et le motocompresseur 6 sont disposés de part et d'autre de ladite enceinte 9. La figure 4 illustre le mode de montage du condenseur 7. Celui-ci est monté en console sur la paroi 3 et est porté par un châssis auto-porteur mécano-soudé 13 composé de deux cadres 13a, 13b disposés à 90° l'un de l'autre et reliés par deux jambes de force 13c travaillant en extension, fixées par exemple par vissage et qui rejoignent la partie haute du cadre 13a et la partie avant du cadre 13b.

Le condenseur 7 est fixé horizontalement sur le cadre 13b de telle sorte que son ventilateur 7b monté en rotation à sa partie supérieure refoule l'air chaud vers l'extérieur et au-delà de la partie haute de la cellule (flèche F2).

La fixation du châssis auto-porteur 13 est réalisée de la même façon que l'évaporateur 8 au moyen d'inserts 14 (figure 2) noyés dans la masse de la paroi 3, identiques à ceux 10 précédemment décrits et de vis 11.

Le montage du motocompresseur 6 est réalisé de la même façon, de l'autre côté de l'enceinte 9. Ainsi le condenseur 7 et le motocompresseur 6 sont situés sur le côté des parois latérales 9d de ladite enceinte et sont disposés dans deux parties de carénage 15, 16 symétriques par rapport à l'enceinte centrale 9.

Les deux parties de carénages 15, 16 prolongent l'enceinte isotherme 9 de part et d'autre et adoptent une forme profilée favorable à la pénétration dans l'air tel qu'illustré à la figure 1. Elles forment deux demi-coquilles obtenues par exemple par moulage d'une matière plastique et sont fixées d'une part, en applique sur lesdites parois antérieures 3 au moyen de vis 11 passées dans des trous 15a réservés le long de leurs bords latéraux 15b et d'autre part, au moyen de pattes 15c, 16c et de vis 11, lesquelles vis 11 coopèrent avec les taraudages d'inserts 14 tels que ceux précédemment décrits, noyés dans la masse des parois 3, 9a, 9b de l'enceinte isotherme 9.

A sa partie supérieure, chaque demi-coquille 15, 16 comporte un orifice se présentant par exemple sous la forme d'une échancrure 15d, 16d, formant un angle obtus pour accompagner le contour de leurs parties latérales et par lesquelles échancrures s'échappe l'air mis en circulation dans le carénage. En position montée, leurs parties inférieures 15e, 16e, prolongent la paroi inférieure 9c de l'enceinte isotherme 9.

Ledit carénage comporte enfin un troisième élément formant une jupe 17, laquelle est profilée tel que cela est illustré à la figure 1, laquelle jupe est adaptée pour s emboîter par le dessous sur les autres éléments 9, 15, 16.

Comme les demi-coquilles 15, 16, elle comporte des trous 17a réservés sur les côtés latéraux 17b et sa fixation en applique sur la paroi antérieure est réalisée comme lesdites demi-coquilles 15, 16 au moyen de vis 11 et d'inserts 14 noyés dans la masse de ladite paroi.

Le fond 17c de la jupe 17 rejoint sa paroi périphérique 17d à la paroi antérieure 3 et comporte un large orifice d'entrée d'air 17e, lequel adopte une forme oblongue et s'étend sur la longueur du fond 17c de la jupe. Le fond 17c est légèrement incurvé vers l'intérieur du carénage (figure 3).

Les câbles d' alimentation électrique des composants du groupe frigorifique sont amenés dans ledit carénage par un chemin de câbles 3c inclus dans l'épaisseur de la paroi antérieure 3. Ledit chemin de câble 3c est par exemple d'une section droite rectangulaire et est réservé au moment du moulage de la paroi au milieu de celle-ci. Il s'étend parallèlement aux bords latéraux de ladite paroi 3, prend naissance à sa partie extrême inférieure et aboutit dans l'espace 18 délimité par la jupe 17 (figure 3). Un couvercle 19, par exemple fixé à la face avant de la paroi 3 au moyen de vis auto-perforeuses, masque le chemin de câbles et est placé en recouvrement de celui-ci après que le câblage ait été réalise.

Un carénage, pour un groupe frigorifique équipant une cellule isotherme placée en arrière de la cabine de pilotage 5 d'un véhicule utilitaire, est représenté en position, à la figure 5.

On voit sur cette figure que ledit carénage occupe la place 3a laissée entre les pavillons de la cellule et de la cabine 5.

Compte tenu de la variété de véhicules susceptibles d'être équipés et du fait que la partie 3a située au-dessus de la cabine peut varier d'un véhicule à l'autre, on réalise la jupe 17 par moulage, de sorte que sa paroi périphérique soit d'une hauteur h permettant de la monter dans le cas où cette partie 3a est la plus grande, et on ajuste ensuite la jupe au moment du montage en la raccourcissant 17f, pour l'adapter au carénage et au véhicule, tout en ménageant un intervalle e entre la jupe 17 et le pavillon de la cabine 5.

On procède d'une façon analogue pour la paroi antérieure 3 afin de l'adapter à la cellule isotherme dudit véhicule.

On réalise donc par moulage ladite paroi 3 et son enceinte 9, en donnant à la paroi une longueur L supérieure à la hauteur H de la cellule devant équiper un véhicule de grandes dimensions et de plus forte puissance, et on raccourcit ladite paroi 3 au moment de la réalisation de la cellule, en fonction de sa hauteur ou de la hauteur de la cellule èquipant des véhicules de dimensions inférieures.

Le raccourcissement de la jupe 17 ou de la paroi antérieure 3 est réalisé dans les règles de l'art par un matériel classique approprié.

Pour la mise en oeuvre en séries de cellules de dimensions différentes, on pourra prévoir un, deux, ou trois types de parois antérieures de largeur et de hauteur différentes.

Bien entendu, les parties qui viennent d'être décrites à titre d'exemples pourront être remplacées par l'homme du métier par des parties équivalentes remplissant la même fonction.

## Revendications

1. Procédé de fabrication d'une cellule isotherme de véhicule frigorifique composée d'une paroi antérieure (3) située en arrière de la cabine de pilotage (5) dudit véhicule et comprenant un groupe frigorifique comportant un évaporateur (8), un motocompresseur (6) et un condenseur (7) dont le froid produit par l'évaporateur (8) est mis en circulation dans ladite cellule, dont ledit groupe frigorifique (6, 7, 8) est monté dans un carénage profilé (9, 15, 16, 17) situé à l'extérieur de la cellule et au-dessus de ladite cabine (5), ledit carénage se composant d'une part, d'au moins une enceinte fixe isotherme (9) communiquant avec la cellule, et d'autre part, d'au moins un élément de carénage (15, 16, 17) raccordé à ladite enceinte (9) et à ladite paroi (3), ladite enceinte (9) faisant partie intégrante de ladite paroi antérieure (3) et comportant des parois (9a à 9d) reliées en continu à ladite paroi antérieure (3), caractérisé en ce qu'on réalise sa paroi antérieure (3) en lui donnant une longueur L, supérieure à la hauteur H d'une cellule adaptée pour équiper un plus gros véhicule et en ce qu'on raccourcit ladite paroi (3) en fonction de la position de son carénage (9, 15, 16, 17) par rapport au pavillon de la cabine (5) dudit véhicule, ou de tout autre véhicule de dimensions inférieures.

2. Procédé selon la revendication 1 caractérisé en ce que l'on réalise la partie de carénage inférieure formant une jupe (17) en lui donnant une hauteur h lui permettant de compléter le carénage (9, 15, 16, 17) du groupe frigorifique d'un plus gros véhicule et en ce qu'on raccourcit en hauteur ladite partie de carénage (17), en fonction de la position du pavillon (1) de la cellule isotherme, par rapport au pavillon de la cabine (5) du véhicule, ou de tout autre véhicule de dimensions inférieures.

3. Procédé selon l'une quelconque des revendications 1 et 2 caractérisé en ce que l'on suspend l'évaporateur (8) à des inserts de fixation (10) de la paroi de toit (9a) de ladite enceinte isotherme (9), de sorte à aménager autour de lui, un espace pour permettre une circulation d'air et favoriser les interventions de maintenance et de réparation.

4. Procédé selon l'une quelconque des revendications 1 à 3 caractérisé en ce que l'on monte le condenseur (7) et le motocompresseur (6) en consoles (13) de part et d'autre de ladite enceinte isotherme (9) et ont les fixe à des inserts (14) implantés dans ladite paroi antérieure (3) de la cellule.

5. Procédé selon l'une quelconque des revendications 1 à 4 caractérisé en ce que l'on inclut dans ladite paroi antérieure (3), au-dessous de l'enceinte isotherme fixe (9), un chemin de câbles (3c) s'étendant de la partie extrême inférieure de ladite paroi (3) jusqu'à l'espace (18) délimité par une jupe amovible (17), et on recouvre ledit chemin de câble par un couvercle (19) placé dans le plan de la face avant de ladite paroi antérieure (3).

6. Procédé selon l'une quelconque des revendications 1 à 5 caractérisée en ce que l'on fixe lesdites parties latérales amovibles (15, 16) du carénage qui comportent un orifice de circulation d'air (15d, 16d) à leur partie supérieure, d'une part à des inserts (14) implantés dans la paroi antérieure (3) de la cellule, et d'autre part à d'autres inserts (14) implantés dans les parois (9a, 9b) de l'enceinte isotherme (9a, 4).

7. Procédé selon l'une quelconque des revendications 1 à 6 caractérisée en ce que l'on fixe la jupe (17) qui complète le carénage au-dessous de l'enceinte isotherme (9) et lesdites parties latérales (15, 16), et qui comporte un large orifice (17e) d'entrée d'air, à des inserts (14) implantés dans la paroi antérieure (3) de la cellule.

## Claims

1. Method for the production of an isothermal cell for a refrigerating vehicle, which cell is composed of a front wall (3) situated at the back of the driver's cabin (5) of said vehicle and comprises a refrigerating unit comprising an evaporator (8), a motor-compressor set (6) and a condenser (7) of which the cold which is produced by the evaporator (8) is caused to circulate in said cell, of which said refrigerating unit (6,7, 8) is mounted in a streamline fairing (9, 15, 16, 17) situated outside the cell and above said cabin (5), said fairing being composed, on the one hand, of at least one fixed isothermal enclosure (9) which communicates with the cell, and on the other hand, of at least one fairing element (15, 16, 17) connected to said enclosure (9) and to said wall (3), said enclosure (9) forming an integral part of said front wall (3) and comprising walls (9a to 9d) connected continuously to said front wall (3), characterized in that its front wall (3) is produced by giving it a length L, greater than the height H of a cell adapted to be fitted in a larger vehicle and in that said wall (3) is shortened as a function of the position of its fairing (9,15,16,17) with respect to the roof of the cabin (5) of said vehicle, or of any other vehicle of smaller dimensions.

2. Method according to claim 1, characterized in that the lower fairing part forming a skirt (17) is produced by giving it a height h which enables it to complete the fairing (9,15,16,17) of the refrigerating unit of a larger vehicle and in that said fairing part (17) is reduced in height, as a function of the position of the roof (1) of the isothermal cell, with respect to the roof of the cabin (5) of the vehicle, or of any other vehicle of smaller dimensions.

3. Method according to any one of claims 1 and 2, characterized in that the evaporator (8) is suspended to fastening inserts (10) of the roof wall (9a) of said isothermal enclosure (9), so as to provide around it, a space allowing an air flow and permitting maintenance and repair operations.

4. Method according to any one of claims 1 to 3, characterized in that the condenser (7) and the motor-compressor (6) are mounted in overhanging fashion (13) on either side of said isothermal enclosure (9) and are fixed to inserts (14) implanted in said front wall (3) of the cell.

5. Method according to any one of claims 1 to 4 characterized in that a cableway (3c) is enclosed in said front wall (3), beneath the fixed isothermal enclosure (9), which cableway extends from the lower end portion of said wall (3) as far as the space (18) defined by a removable skirt (17), and said cableway is covered over by a cover (19) placed in the plane of the front face of said front wall (3).

6. Method according to any one of claims 1 to 5, characterized in that said removable lateral parts (15, 16) of the fairing which comprise an air circulation orifice (15d, 16d) at their upper part, are fixed, on the one hand, to inserts (14) implanted in the front wall (3) of the cell, and on the other hand, to other inserts (14) implanted in the walls (9a, 9b) of the isothermal enclosure (9a, 4).

7. Method according to any one of claims 1 to 6, characterized in that the skirt (17) which completes the fairing beneath the isothermal enclosure (9) and said lateral parts (15, 16) and which comprises a large air inlet orifice (17e), is fixed to inserts (14) implanted in the front wall (3) of the cell.

## Patentansprüche

1. Verfahren zur Herstellung einer isothermischen Zelle von Kühlwagen mit einer Vorderwand (3), die hinter dem Führerhaus (5) des Fahrzeugs gelegen ist und eine Kühleinheit aufweist mit einem Verdunster (8), einem Motorkompressor (6) und einem Kondensor (7), wobei die von dem Verdunster (8) erzeugte Kälte in der Zelle umgewälzt wird und wobei die Kühleinheit (6, 7, 8) in einer vorstehenden Verkleidung (9, 15, 16, 17) angebracht ist, die außerhalb der Zelle und oberhalb des Führerhauses (5) angeordnet ist, wobei die Verkleidung einerseits mindestens einen festen isothermen Behälter (9) aufweist, der mit der Zelle in Verbindung steht und andererseits mindestens ein Verkleidungselement (15, 16, 17), das an dem Behälter (9) und an der Wand (3) befestigt ist, wobei der Behälter (9) ein integraler Bestandteil der Vorderwand (3) ist und Wände (9a bis 9d) aufweist, die stetig mit der Vorderwand (3) verbunden sind,
**dadurch gekennzeichnet,** daß
die Vorderwand (3) dadurch hergestellt wird, daß sie zuerst eine Länge L aufweist, die größer als die Höhe H einer Zelle ist, welche dazu bestimmt ist, ein größeres Fahrzeug auszurüsten und dadurch, daß die Wandung (3) in Abhängigkeit von der Lage seiner Verkleidung (9, 15, 16, 17) relativ zur Führerkabine (5) des Fahrzeugs oder anderer Fahrzeuge mit kleineren Abmessungen gekürzt wird.

2. Verfahren nach Anspruch 1 dadurch gekennzeichnet, daß der untere Teil der Verkleidung so hergestellt wird, daß er eine Schürze (17) bildet, der eine Höhe h hat, die es ermöglicht, die Verkleidung (9, 15, 16, 17) der Kühleinheit eines größeren Fahrzeugs zu vervollständigen und dadurch, daß dieser Teil der Verkleidung (17) in Abhängigkeit von der Lage des Oberteils (1) der isothermen Zelle im Verhältnis zu dem Oberteil des Führerhauses (5) des Fahrzeugs oder eines jeden anderen Fahrzeugs mit kleineren Abmessungen gekürzt wird.

3. Verfahren nach einem der Ansprüche 1 und 2, dadurch gekennzeichnet, daß der Verdampfer (8) an Festigungssätzen (10) der Dachwandung (9a) des isothermen Behälters (9) so aufgehangen wird, daß um ihn herum ein Raum freigelassen wird, der eine Luftzirkulation ermöglicht und der Instandsetzungs- und Reparaturarbeiten begünstigt.

4. Verfahren nach einem der Ansprüche 1 bis 3, dadurch gekennzeichnet, daß der Kondensor (7) und der Motorkompressor (6) auf Stützen (13) zu beiden Seiten des isothermen Behälters (9) montiert sind und diese an Einsätzen (14) befestigt sind, die in der Vorderwand (3) der Zelle eingebaut sind.

5. Verfahren nach einem der Ansprüche 1 bis 4, dadurch gekennzeichnet, daß in die Vorderwand (3) oberhalb des festen isothermen Behälters (9) ein Kabelkanal (3c) integriert ist, der sich von dem unteren Endbereich der Wand (3) bis zu dem Raum (18) erstreckt, der von einer abnehmbaren Schürze (17) begrenzt wird und dadurch, daß dieser Kabelkanal von einem Deckel (19) verschlossen wird, der in der Ebene der Vorderseite der Forderwand (3) gelegen ist.

6. Verfahren nach einem der Ansprüche 1 bis 5, dadurch gekennzeichnet, daß die seitlichen abnehmbaren Bereiche (15, 16) der Verkleidung, die eine Luftumwälzöffnung (15d, 16d) an ihrem oberen Teil aufweisen, einerseits an Einsätzen befestigt werden, die in der Vorderwand (3) der Zelle integriert sind, und andererseits an deren Einsätzen (14), die in den Wandungen (9a, 9b) des isothermen Behälters (9a, 4) eingesetzt sind.

7. Verfahren nach einem der Ansprüche 1 bis 6, dadurch gekennzeichnet, daß die Schürze (17), die die Verkleidung oberhalb des isothermen Behälters (9) und die Seitenbereiche (15, 16) vervollständigt und die eine Lufteinlaßöffnung (17e) aufweist, an Einsätzen (14) befestigt wird, die in der Vorderwand (3) der Zelle eingesetzt sind.
